# EUROPÄISCHE PATENTANMELDUNG

(11) **EP 3 291 128 A1**
(43) Veröffentlichungstag der Anmeldung: **07.03.2018**
(21) Anmeldenummer: 16187105.8
(22) Anmeldetag: 02.09.2016
(51) Int. Cl.: G06K 7/00, G06Q 20/04, G07F 5/00, G06Q 20/40, H04W 12/00, G07F 7/08

(54) **KONSUMARTIKELAUSGABEVERFAHREN, KONSUMARTIKELAUSGABEVORRICHTUNG, ELEKTRONISCHE DATENVERARBEITUNGSANLAGE UND KONSUMARTIKELAUSGABESYSTEM**

(71) Anmelder: Aparthotel Arabella Moritz GmbH & Co KG, 6543 Nauders (AT)
(72) Erfinder: Moritz, Herrn Christoph, 6543 Nauders (AT)
(74) Vertreter: Prüfer & Partner mbB Patentanwälte · Rechtsanwälte

(57) **Zusammenfassung**

Es wird ein Konsumartikelausgabeverfahren offenbart, das die Schritte aufweist: - Identifizieren eines Benutzers (B) an einer Konsumausgabevorrichtung (21, 22, 23, 24); - Auswählen eines Konsumartikels (A) durch den Benutzer (B) an der Konsumausgabevorrichtung (21, 22, 23, 24); - Ermitteln, ob dieser Benutzer (B) konsumberechtigt ist; - Ausgeben des durch den Benutzer (B) gewählten Konsumartikels (A), falls der Benutzer (B) grundsätzlich konsumberechtigt ist; - Übermitteln von mit dem ausgegebenen Konsumartikel (A) in Verbindung stehenden Informationen (Menge, ID oder Preis) an eine EDV, die mit der Konsumausgabevorrichtung (21, 22, 23, 24) über ein elektronisches Datennetz (eDN) verbunden ist; - Erfassen der Informationen und Verbuchen auf einem Konto (K), welchem der Benutzer (B) zugeordnet ist, durch die EDV.

## Beschreibung

Die vorliegende Erfindung bezieht sich auf ein Konsumartikelausgabeverfahren, eine Konsumartikelausgabevorrichtung, eine elektronische Datenverarbeitungsanlage und ein Konsumartikelausgabesystem, beispielsweise in einem Gastronomie- und/oder Hotelbetrieb. Hierfür werden erfindungsgemäß vorzugsweise RFID-Transponder eingesetzt.

Im Stand der Technik sind RFID-Transponder (radio frequency identification transponer) bekannt, die eine Antenne, einen analogen Schaltkreis zum Empfangen und Senden, einen digitalen Schaltkreis, sowie einen permanenten Speicher aufweisen. Dieser Speicher kann je nach Ausführungsform des RFID-Transponders entweder einmal, oder auch mehrfach beschreibbar sein. Durch ein Lese-/Schreibgerät wird ein elektromagnetisches Wechselfeld erzeugt und von dem RFID-Transponder empfangen. Durch dieses Wechselfeld wird zum einen Information von dem Lese-/Schreibgerät auf den RFID-Transponder übertragen und/oder der RFID-Transponder mit Energie versorgt, so dass dieser den elektronischen Schaltkreis betreiben, Daten aus dem Speicher auslesen, Daten in den Speicher speichern und gegebenenfalls seinerseits Daten mittels elektromagnetischer Wechselfelder an das Lese-/Schreibgerät übertragen kann. Die Übertragungsreichweiten solcher Systeme betragen üblicherweise wenige Zentimeter.

Im Stand der Technik ist des Weiteren eine Verwendung von RDID-Transpondern in der Systemgastronomie bekannt. Beispielsweise verwendet die Restaurantkette VAPIANO^{®} RFID-Transponder mit einem mehrfach beschreibbaren Speicher, welche in das Bestell- und Abrechnungssystem des Restaurants integriert sind. Hierbei erhält jeder Gast, der ein Restaurant dieses Anbieters betritt, einen RFID-Transponder in der Größe einer Scheckkarte. Dabei ist es für einen Gast nicht vorgesehen, einen zweiten RFID-Transponder zu erhalten. Beim Bestellen eines Getränks oder eines Gerichts wird der hierfür anfallende Geldbetrag auf dem RFID-Transponder des Gasts gespeichert bzw. aufaddiert. Falls ein Gast das Restaurant verlässt, muss an der Kasse der auf "seinem" RFID-Transponder gespeicherte Geldbetrag beglichen werden.

Des Weiteren kann ein zum Konsum vorgesehener maximaler Geldbetrag pro RFID-Transponder festgelegt werden, beispielsweise ein Betrag von 50 Euro. Falls der RFID-Transponder eines Gasts während des Restaurantbesuchs abhandenkommt, so muss der Gast beim Verlassen des Restaurants den festgelegten maximalen Geldbetrag bezahlen. Denn es könnte dem Gast unterstellt werden, er habe für den festgelegten maximalen Geldbetrag Getränke und Speisen konsumiert, diese auf seinem RFID-Transponder verbuchen lassen, und den RFID-Transponder daraufhin verschwinden lassen.

Diese Implementierung der RFID-Technik ähnelt der Funktion einer klassischen Bierdeckelabrechnung, auf welchem für jedes konsumierte Getränk ein Strich vermerkt wird, und am Ende eines Gaststättenbesuchs die auf dem Bierdeckel vermerkten Getränke bezahlt werden müssen.

Im Stand der Technik ist des Weiteren eine Verwendung von RFID-Transpondern in einem Hotelbetrieb bekannt, um mit dem RFID-Transponder eine Zutrittskontrolle zu einem Hotelzimmer durchzuführen. Hierbei wird an einen Hotelgast eine mit einem RFID-Transponder versehene Schlüsselkarte ausgegeben. Auf dieser wird die Berechtigung zum Öffnen bestimmter Türen gespeichert. Diese Berechtigung wird durch Türen zugeordnete Lesegeräte ausgewertet und je nach Berechtigung die Türe geöffnet.

Darüber hinaus ist es bekannt, RFID-Transponder in der Gastronomie zum Speichern von Geldguthaben zu verwenden. Hierbei kann ein RFID-Transponder an dafür vorgesehenen Terminals mit Geldguthaben aufgeladen werden, beispielsweise durch Einführen von Bargeld in das Terminal. Der Guthabenbetrag wird daraufhin in dem Speicher des RFID-Transponders gespeichert bzw. auf diesen aufgebucht. Falls ein Gast daraufhin an beispielsweise einem Kaffeeautomat ein Getränk erwerben möchte, bringt er hierfür seinen RFID-Transponder mit dem Kaffeeautomat in Kontakt, und der zu zahlende Geldbetrag für das Getränk wird durch den Kaffeeautomat von dem RFID-Transponder des Gasts abgebucht. Ein solches Verfahren ist außerdem aus dem Hotelgewerbe bekannt, bei welchem ein Hotelgast seinen RFID-Transponder entweder wie oben beschrieben mit Bargeld aufladen kann, oder das Aufladen des RFID-Transponder an der Hotelrezeption dadurch erfolgt, dass dem RFID-Transponder durch einen Hotelmitarbeiter ein Guthaben aufgebucht wird, welches der Hotelmitarbeiter manuell in ein Abrechnungssystem des Hotels eingibt, sodass der Geldbetrag später in die Hotelrechnung des Gastes eingerechnet werden kann.

Bei dem Stand der Technik kann der Nachteil bestehen, dass bei Verlust oder Vorenthaltung des RFID-Transponders abzurechnende Kosten vor dem Betreiber unterschlagen oder von diesem nicht nachvollzogen werden können, sodass es zu Lasten der einen oder anderen Partei zu Informationsverlusten und Abrechnungsfehlern kommen kann. Zusätzlich oder alternativ kann der Nachteil bestehen, dass gleichzeitig mehrere unterschiedliche Abrechnungsmodelle, beispielsweise Vorkasse- und Abschlussrechnungsmodelle eingesetzt werden müssen, was den Personal- und Arbeitsaufwand erhöht. Zusätzlich oder alternativ kann der Nachteil bestehen, dass die im Stand der Technik verwendeten RFID-Transponder wiederbeschreibbar sein müssen, was sie teuer und verschleiß- und fehleranfällig macht.

Es ist eine Aufgabe der Erfindung, die Probleme aus dem Stand der Technik zu lösen und ein Konsumartikelausgabeverfahren, eine Konsumartikelausgabevorrichtung, eine elektronische Datenverarbeitungsanlage und ein Konsumartikelausgabesystem anzubieten, welches ohne das Vorhandensein von Verkaufspersonal ein Ausgeben von Konsumartikeln an einen Konsumenten ermöglicht, wobei für den Anbieter der Konsumartikel trotzdem kein Risiko des Diebstahls durch den Konsumenten besteht.

Die Aufgabe wird mittels eines Konsumartikelausgabeverfahrens, einer Konsumartikelausgabevorrichtung, einer elektronischen Datenverarbeitungsanlage und eines Konsumartikelausgabesystems nach den nebengeordneten Ansprüchen gelöst. Gegenstand der Unteransprüche sind vorteilhafte Weiterbildungen der Erfindung.

Offenbart wird ein Konsumartikelausgabeverfahren, das die Schritte aufweist: Identifizieren eines Benutzers an einer Konsumausgabevorrichtung, Auswählen eines Konsumartikels durch den Benutzer an der Konsumausgabevorrichtung, Ermitteln, ob dieser Benutzer konsumberechtigt ist, Ausgeben des durch den Benutzer gewählten Konsumartikels, falls der Benutzer grundsätzlich konsumberechtigt ist, Übermitteln von mit dem ausgegebenen Konsumartikel in Verbindung stehenden Informationen (Menge, ID und/oder Preis) an eine elektronische Datenverarbeitungsvorrichtung, die mit der Konsumartikelausgabevorrichtung über ein elektronisches Datennetz verbunden ist, Erfassen der Informationen und Verbuchen auf einem Konto, welchem der Benutzer zugeordnet ist, durch die elektronische Datenverarbeitungsvorrichtung.

Mit einem erfindungsgemäßen Verfahren können Konsumartikel ausgegeben werden, ohne hierfür Verkaufspersonal vorsehen und abstellen zu müssen. Dabei besteht kein Risiko, dass der Artikel (=Konsumartikel) durch den Verbraucher (=Benutzer) nicht bezahlt wird. Durch das Identifizieren des Verbrauchers, und durch das Vorsehen eines Kontos, dem der Verbraucher zugeordnet ist, kann der Verkaufspreis eines Artikels auf dem Konto des Verbrauchers verbucht werden. Durch das Ermitteln, ob ein Verbraucher konsumberechtigt ist, wird verhindert, dass ein Benutzer, der nicht konsumberechtigt und/oder keinem Konto zugeordnet ist, Konsumartikel erhält.

Die Abfolge der Schritte des erfindungsgemäßen Verfahrens müssen nicht in der angegebenen Reihenfolge abgearbeitet werden. Beispielsweise kann der Identifikationsvorgang auch nach dem Auswählen eines Konsumartikels erfolgen. Die Reihenfolge aller Schritte ist grundsätzlich veränderbar. Dies gilt ebenfalls für alle vorteilhaften Ausgestaltungen.

Durch das vorzugsweise Identifizieren des Verbrauchers durch einen Transponder wird der Identifikationsprozess vereinfacht und effizient gestaltet. Es muss kein Transponder mit einem wiederbeschreibbaren Speicher verwendet werden, ein einfach beschreibbarer Speicher genügt. Der Transponder muss vorzugsweise lediglich sein Identifikationsmerkmal übermitteln, die elektronische Datenverarbeitungsvorrichtung (=EDV) nimmt daraufhin eine Zuordnung zu dem Konto des Verbrauchers vor. Vorzugsweise ist allerdings auch der Einsatz von Transpondern mit wiederbeschreibbarem Speicher vorgesehen, um auch Funktionen implementieren zu können, die einen wiederbeschreibbaren Speicher benötigen.

Durch das vorzugsweise Identifizieren des Benutzers durch die Konsumausgabevorrichtung muss kein zusätzliches Lesegerät vorgesehen werden. Zudem können mehrere Benutzer gleichzeitig an mehreren Konsumausgabevorrichtungen identifiziert und bedient werden.

Durch das vorzugsweise identifizieren des Benutzers durch ein Lesegerät müssen die Konsumausgabevorrichtungen keine Fähigkeit zur Identifikation besitzen. Es muss lediglich ein einziges Lesegerät oder eine geringere Anzahl an Lesegeräten als die Anzahl der Konsumausgabevorrichtungen vorgesehen werden, wodurch die Ausgestaltung kostengünstiger auszuführen ist.

Durch das vorzugsweise' Speichern des Kontos innerhalb der EDV, und nicht innerhalb des Transponders, ist kein Transponder mit wiederbeschreibbarem Speicher notwendig. Des Weiteren ist hierdurch keine Manipulation des Kontostandes auf dem Transponder möglich, da dieser lediglich sein Identifikationsmerkmal übermittelt.

Durch das vorzugsweise Einsetzen des Verfahrens in einem Gastronomie- und/oder Hotelbetrieb ist es möglich, den Preis der von einem Hotelgast (=Benutzer, Verbraucher) konsumierten Konsumartikel direkt auf das Konto des Hotelgasts zu verbuchen, so dass der zu zahlende Betrag auf der Hotelrechnung des Gastes erscheint, um so Arbeitsaufwand und Personal zu sparen. Vorzugsweise ist dem Hotelgast jederzeit ein Lesezugriff auf sein Konto möglich, um den aktuellen Kontostand bzw. die Summe der konsumierten Konsumartikel abzurufen und zu überprüfen. In einem Hotelbetrieb werden als Konsumausgabevorrichtungen vorzugsweise Kaffeevollautomaten, Bierausschankanlagen, Weinausschankanlagen, Heißwasserausschankanlagen, und/oder Ausschankanlagen zum Ausschenken von alkoholfreien Kaltgetränken vorgesehen. Des Weiteren sind als Konsumausgabevorrichtungen unter anderem Snack-Automaten, Zigaretten-Automaten, Pizza-Automaten oder ähnliches denkbar.

Durch den vorzugsweisen Einsatz des Verfahrens in einem Hotelbetrieb muss zudem kein Fachpersonal zum Ausschenken von Getränken vorgesehen und abgestellt werden, vielmehr kann der Hotelgast die gewünschten Getränke mittels Selbstbedienung zu jeder Tag- und Nachtzeit selbst beziehen. Der Bezahlvorgang läuft hierbei sicher, komfortabel und transparent ab. Dies erlaubt, weiter Arbeitsaufwand und Personal zu sparen. Des Weiteren sieht sich der Hotelgast keinem Konsumzwang ausgesetzt, da kein Hotelmitarbeiter hinter einer Theke auf Bestellungen wartet.

Bei einem Einsatz des Verfahrens in einem Hotelbetrieb wird vorzugsweise beim Ermitteln der Konsumberechtigung des Benutzers überprüft, ob der Benutzer bzw. sein Transponder einem Hotelzimmer zugeordnet ist. Hierdurch wird sichergestellt, dass kein Gast nach dem Bezahlen seiner Hotelrechnung weitere Getränke konsumiert, welche dann nicht auf das Konto des Gastes verbucht werden können.

Durch das vorzugsweise Ermitteln, ob der Benutzer speziell zum Konsum an der gewählten Konsumausgabevorrichtungen berechtigt ist, kann sichergestellt werden, dass beispielsweise kein minderjähriger Benutzer an einer Ausschankanlage für ausschließlich alkoholhaltige Getränke ein Getränk bezieht.

Durch das vorzugsweise Ermitteln, ob der Benutzer speziell zum Konsum des ausgewählten Konsumartikel berechtigt ist, kann sichergestellt werden, dass beispielsweise kein minderjähriger Benutzer an einer Ausschankanlage für sowohl alkoholfreier als auch alkoholhaltige Getränke ein Getränk bezieht, welches Alkohol enthält.

Vorzugsweise erfolgt das Ermitteln, ob der gewählte Konsumartikel Alkohol und/oder Koffein und/oder Nikotin enthält, mittels Nachschlagen in einer Liste, oder mittels Abfragen einer in der EDV gespeicherten Datenbank.

Durch das vorzugsweise Zuordnen von mehreren Benutzern zu einem einzigen Konto können beispielsweise mehrere Hotelgäste ihre Getränkerechnung auf ein einziges Zimmer verbuchen. Falls beispielsweise eine Familie mit Kindern in einem Hotel zu Gast ist, erhält jedes Familienmitglied einen eigenen Transponder. Folglich kann der Konsum von jedem Familienmitglied auf einem einzigen Konto, nämlich dem Konto des gemeinsamen Hotelzimmers, verbucht werden. Vorzugsweise sind die Transponder der Eltern hierbei dazu berechtigt, alkoholhaltige Getränke zu beziehen, die Transponder der Kinder aber nicht.

Vorzugsweise sind die Transponder sperrbar, sodass diese von Lesegeräten und Konsumausgabevorrichtungen nicht mehr akzeptiert werden, um im Falle eines Verlusts oder eines Diebstahls eines Transponders einen Missbrauch zu verhindern.

Gemäß einer weiteren vorteilhaften Ausgestaltung wird der Preis eines von einem Benutzer an einer Konsumausgabevorrichtung bezogenen Konsumartikels nicht auf das Hotelzimmerkonto des Benutzers gebucht, sondern direkt von dem Bank- oder Kreditkartenkonto des Benutzers abgebucht. Gemäß dieser Ausgestaltung wird ein wie oben beschriebener Transponder zum Identifizieren des Benutzers verwendet, wobei die zum Abbuchen von dem Bank- oder Kreditkartenkonto benötigten Informationen in der EDV hinterlegt sind.

Gemäß einer weiteren vorteilhaften Ausgestaltung wird zusätzlich zu der gerade beschriebenen Ausgestaltung als Transponder eine Debit- oder Kreditkarte verwendet. Die zur Identifizierung des Benutzers benötigten Daten werden dabei aus einem in die Karte integrierten RDIF-Transponders und/oder EMV-Chips und/oder Magnetstreifens bezogen.

Gemäß einer weiteren vorteilhaften Ausgestaltung ist der Transponder nicht lediglich ein RFID-Transponder, sondern ein NFC-Transponder. Vorzugsweise ist dieser in ein Smartphone oder in eine Smartwatch integriert.

Gemäß einer weiteren vorteilhaften Ausgestaltung wird die Identifikation des Benutzers nicht über einen Transponder ausgeführt, sondern über einen Fingerabdruck des Benutzers, der vorab in der EDV hinterlegt wurde. Hierbei wird als Lesegerät ein Fingerabdrucklesegerät eingesetzt.

Ferner ist eine Konsumartikelausgabevorrichtung offenbart, die zum Ausführen eines der obigen Konsumartikelausgabeverfahren eingerichtet ist, wobei die Konsumartikelausgabevorrichtung dazu eingerichtet ist, mit einer elektronischen Datenverarbeitungsvorrichtung über ein elektronisches Datennetz zu kommunizieren.

Durch eine solche Konsumartikelausgabevorrichtung wird die Aufgabe der Erfindung gelöst.

Kann die Konsumartikelausgabevorrichtung den RFID-Transponder identifizieren, ist kein separates Lesegerät erforderlich.

Ferner ist eine elektronische Datenverarbeitungsvorrichtung offenbart, die zum Ausführen eines obigen Konsumartikelausgabeverfahren eingerichtet ist, wobei die elektronische Datenverarbeitungsvorrichtung dazu eingerichtet ist, mit einer Konsumartikelausgabevorrichtung über ein elektronisches Datennetz zu kommunizieren.

Durch eine solche elektronische Datenverarbeitungsvorrichtung wird die Aufgabe der Erfindung gelöst.

Ist die elektronische Datenverarbeitungsvorrichtung dazu eingerichtet, mit einem Lesegerät über das elektronische Datennetz zu kommunizieren, ist es nicht erforderlich, jede Konsumartikelvorrichtung mit eigenen Lesegeräten auszustatten.

Ferner ist ein System zum Ausführen eines der obigen Konsumartikelausgabeverfahren offenbart, das aufweist: die obige elektronische Datenverarbeitungsvorrichtung, wenigstens eine der obigen Konsumartikelausgabevorrichtungen, wenigstens einen Transponder, wobei die Konsumartikelausgabevorrichtung und die elektronische Datenverarbeitungsvorrichtung über ein elektronisches Datennetz miteinander verbunden sind.

Durch ein solches System wird die Aufgabe der Erfindung gelöst.

Das erfindungsgemäße Verfahren und das erfindungsgemäße System sind neben dem Einsatz in einem Gastronomie- und/oder Hotelbetrieb außerdem für einen Einsatz in einem Mitarbeiteraufenthaltsbereich in einem Unternehmen, in einem Kantinenbetrieb, in Bildungseinrichtungen, in öffentlichen Einrichtungen, wie Infrastruktureinrichtungen, Krankenhäusern und Verwaltungseinrichtungen, geeignet; oder auch in einem Fitnessstudio, wobei die Mitgliedskarte des Studios neben der Zutrittsberechtigung außerdem als Transponder dient.

Im Folgenden wird die Erfindung anhand von Ausführungsbeispielen unter Verweis auf die Figuren beschrieben.
Fig. 1 zeigt eine Ausführungsform eines erfindungsgemäßen Konsumausgabeverfahrens.
Fig. 2a zeigt eine Ausführungsform eines erfindungsgemäßen Konsumartikelausgabesystems.
Fig. 2b zeigt eine Ausführungsform eines erfindungsgemäßen Konsumartikelausgabesystems.
Fig. 3 zeigt eine spezifische Ausführungsform eines erfindungsgemäßen Konsumartikelausgabesystems in einem Hotelbetrieb.

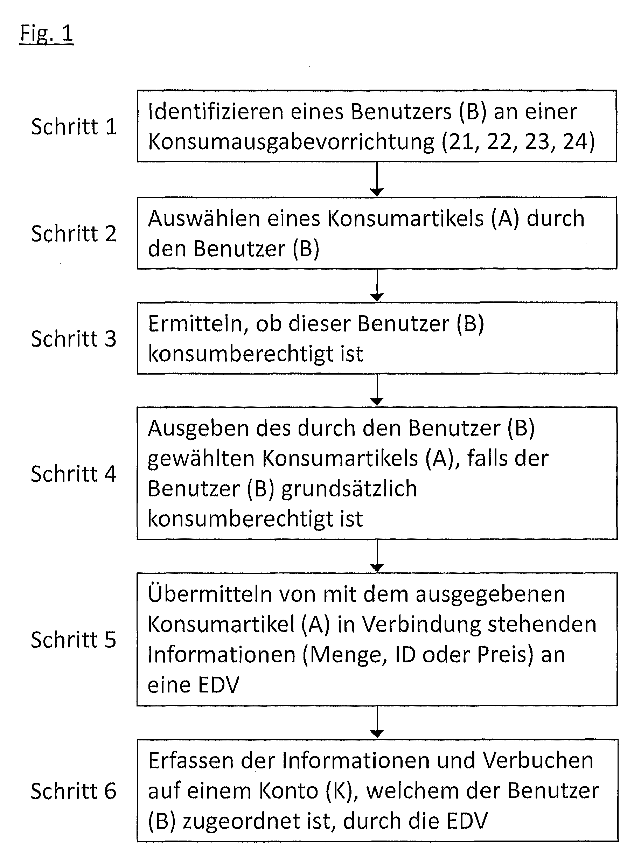

Fig. 1 zeigt ein Ablaufdiagramm einer Ausführungsform des erfindungsgemäßen Verfahrens.

Im Schritt 1 wird ein Benutzer B an einer der Konsumausgabevorrichtungen 21, 22, 23, 24 identifiziert. Dies kann entweder direkt durch die Konsumausgabevorrichtungen 21, 22, 23, 24, oder durch ein von den Konsumartikelausgabevorrichtungen separates Lesegerät 40 erfolgen.

Im Schritt 2 wählt der Benutzer B einen von ihm gewünschten Konsumartikel A aus. Hierbei betätigt er auf einer Eingabevorrichtung der Konsumartikelausgabevorrichtung 21, 22, 23, 24 ein oder mehrere Bedienfelder, über die Art und Menge des gewünschten Konsumguts ausgewählt werden.

Im Schritt 3 wird durch die Konsumartikelausgabevorrichtung 21, 22, 23, 24 ermittelt, ob der Benutzer B konsumberechtigt ist. Hierzu wird von der Konsumartikelausgabevorrichtung 21, 22, 23, 24 über das Datennetz von der EDV erfragt, ob ein entsprechendes Konto oder ein entsprechender Benutzer im System angelegt wurde. Ist dies nicht der Fall, wird der Benutzer über den Berechtigungsmangel informiert und das Konsumartikelausgabeverfahren abgebrochen.

Alternativ können solche Sperrvermerke nicht beim Konsumwunsch von der Konsumartikelausgabevorrichtung 21, 22, 23, 24 bei der EDV erfragt werden, sondern sie werden bei Ausgabe des Transponders, dem Anlegen des Kontos oder dem Einrichten des Benutzers an die Konsumartikelausgabevorrichtungen 21, 22, 23, 24 übertragen und dort gespeichert.

Die ersten drei Schritte können in einer anderen Ausführungsform eine andere, beliebige Reihenfolge aufweisen.

Im Schritt 4 wird der durch den Benutzer B gewählte Konsumartikel A durch die Konsumausgabevorrichtungen 21, 22, 23, 24 ausgegeben, falls der Benutzer B grundsätzlich konsumberechtigt ist. Eine grundsätzliche Konsumberechtigung ist dahingehend zu verstehen, dass der Benutzer B möglicherweise nicht zum Konsum aller Konsumartikel A berechtigt ist und/oder möglicherweise nicht zum Konsum an jeder der Konsumausgabevorrichtungen 21, 22, 23, 24 berechtigt ist, grundsätzlich aber schon zum Konsum berechtigt ist. Der Benutzer B ist also angelegt und einem Konto K zugeordnet. Dieses Konto ist außerdem aktiv.

Ferner kann das Verfahren hier den Teilschritt aufweisen, eine spezielle Konsumberechtigung des Benutzers abzufragen. Hierzu wird von der Konsumartikelausgabevorrichtung 21, 22, 23, 24 über das Datennetz von der EDV erfragt, ob es bezüglich des verlangten Konsumartikels einen Sperrvermerk gibt. In der EDV ist hinterlegt, ob es beispielsweise aus Altersgründen einen Sperrvermerk für nicht für alle Altersstufen freigegebene Konsumartikel gibt, wie alkohol- oder nikotinhaltige Artikel. Wird festgestellt, dass der Benutzer nicht zum Erwerb des verlangten Konsumartikels berechtigt ist, wird der Benutzer über den Berechtigungsmangel informiert und das Konsumartikelausgabeverfahren wird abgebrochen.

Im Schritt 5 werden Informationen, die mit dem Konsumartikel A in Zusammenhang stehen, an eine EDV übermittelt. Bei den Informationen handelt es sich beispielsweise um eine Menge, eine Identität, und/oder einen Preis.

Im Schritt 6 werden die Informationen aus dem Schritt 5 durch die EDV erfasst und auf einem Konto K verbucht, dem der Benutzer B zugeordnet ist. Beendet der Gast seinen Hotelaufenthalt, können die auf dem Konto aufgeführten Konsumartikel oder Kosten mit der Hotelgesamtrechnung in Rechnung gestellt werden.

Durch die erfindungsgemäße bargeldlose Abwicklung des Verkaufsvorgangs der Konsumartikel wird unter Zuhilfenahme der Hotelsoftware die gesetzliche Registrierkassenpflicht erfüllt.

In einer anderen Ausführungsform kann die Reihenfolge der Schritte 4 und 5 vertauscht sein. In einer anderen Ausführungsform kann außerdem Schritt 4 erst nach Schritt 6 erfolgen. Wichtig bei der Reihenfolge der Schritte 4 bis 6 ist lediglich, dass das Erfassen der Informationen und Verbuchen auf einem Konto erst dann erfolgen kann, wenn die Informationen an die EDV ermittelt wurden. Die Reihenfolge der Schritte 5 und 6 ist folglich nicht vertauschbar.

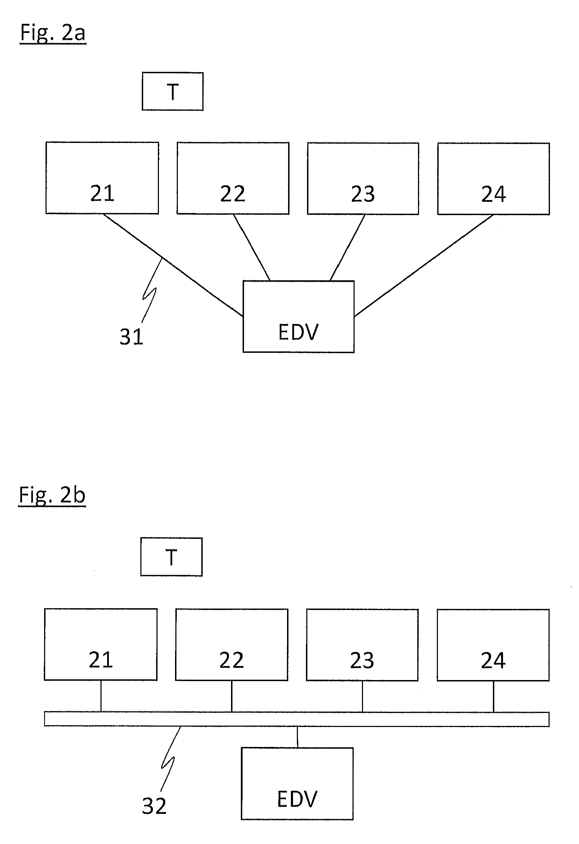

Fig. 2a zeigt eine Ausführungsform eines erfindungsgemäßen Konsumartikelausgabesystems 1. Es weist Konsumartikelausgabevorrichtungen 21, 22, 23, 24 auf. Ferner weist es eine elektronische Datenverarbeitungsvorrichtung (EDV) auf. Mittels Datenverbindungen über ein Datennetz 31 sind die Konsumartikelausgabevorrichtungen 21, 22, 23, 24 mit der EDV verbunden. In dieser Ausführungsform ist zwischen jeder Konsumartikelausgabevorrichtung 21, 22, 23, 24 und der EDV jeweils eine eigene, dedizierte einzelne Datenverbindung vorgesehen, wie dies beispielsweise mit mittels Universal Serial Bus (USB) an die EDV angeschlossene Konsumartikelausgabevorrichtungen der Fall wäre.

Fig. 2b zeigt eine weitere Ausführungsform eines erfindungsgemäßen Konsumartikelausgabesystems 1. Dieses unterscheidet sich dadurch von der Ausführungsform aus Fig. 1a, dass zwischen EDV und jeder Konsumartikelausgabevorrichtung 21, 22, 23, 24 kein Datennetz 31 mit jeweils eigenen, dedizierten einzelne Datenverbindungen 31 vorgesehen ist, sondern ein Datennetz 32 mit einem Daten-BUS, an den jede der Konsumartikelausgabevorrichtungen 21, 22, 23, 24 sowie die EDV angeschlossen sind.

Die Datenverbindungen des Datennetzes 31 und der Daten-BUS des Datennetzes 32 bilden ein elektronisches Datennetz. Des Weiteren ist in den in den Figuren 2a und 2b gezeigten Ausführungsformen jeweils ein Transponder T dargestellt, der als RDIF-Transponder ausgeführt ist. Die Konsumartikelausgabevorrichtung 21 stellt jeweils eine Ausgabevorrichtung für Erfrischungsgetränke dar, die Konsumartikelausgabevorrichtung 22 jeweils eine Ausgabevorrichtung für Bier, die Konsumartikelausgabevorrichtung 23 jeweils eine Ausgabevorrichtung für Kaffee, und die Konsumartikelausgabevorrichtung 24 jeweils eine Ausgabevorrichtung für Wein. Die Konsumartikelausgabevorrichtungen 21, 22, 23, 24 sind des Weiteren so ausgeführt, dass diese einen Benutzer direkt anhand des Transponder T identifizieren können, ohne dass hierfür ein zusätzliches Lesegerät vorgesehen ist.

Gemäß einer weiteren, nicht dargestellten Ausführungsform wird das Datennetz über eine LAN- bzw. Ethernet-Verbindung aufgebaut.

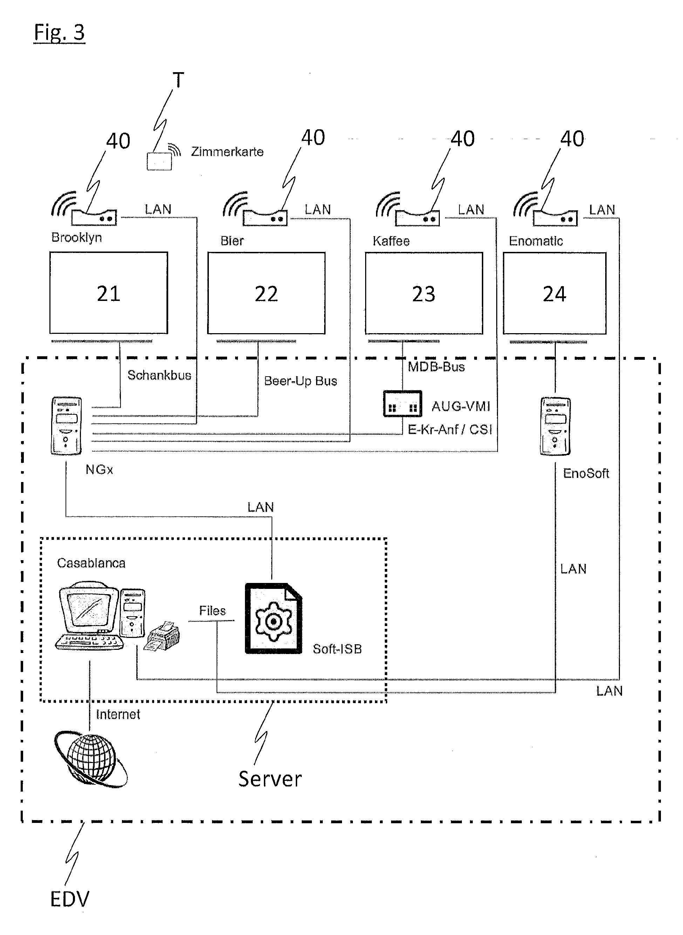

Fig. 3 zeigt eine spezifische Ausführungsform eines erfindungsgemäßen Systems 1 in einem Hotelbetrieb. Bei der Konsumartikelausgabevorrichtungen 21 handelt es sich um eine Ausschankanlage (für alkoholfreie Getränke) des Typs "Brooklyn^{®}". Bei der Konsumartikelausgabevorrichtungen 22 handelt es sich um eine Ausschankanlage (für Bier) des Typs "Bottoms Up Beer^{®}". Bei der Konsumartikelausgabevorrichtungen 23 handelt es sich um eine Ausschankanlage für Kaffee und Tee. Bei der Konsumartikelausgabevorrichtungen 24 handelt es sich um eine Ausschankanlage (für Wein) des Typs "Enomatic^{®}".

Die Konsumartikelausgabevorrichtungen 21, 22, 23, 24 sind in dieser Ausführungsform mit eigenen Betriebsmitteln nicht dazu in der Lage, einen Transponder T zu identifizieren. Hierfür ist vielmehr für jede der Konsumartikelausgabevorrichtungen 21, 22, 23, 24 ein Lesegerät 40 vorgesehen. Die EDV beinhalt in dieser Ausführungsform alle Komponenten innerhalb des gestrichpunkteten Rechtecks in der unteren Bildhälfte der Fig. 3. Die EDV weist dabei einen Server auf, der alle Komponenten beinhaltet, die innerhalb des gepunkteten Rechtecks in Fig. 3 dargestellt sind.

Innerhalb der EDV ist ein Schankcomputer des Typs "NGx^{®}" vorgesehen. Die Datenverbindung zwischen jedem Gerät innerhalb der EDV, zwischen den Konsumartikelausgabevorrichtungen 21, 22, 23, 24 und der EDV, sowie zwischen den Lesegeräten 40 und der EDV, erfolgt über eine Ethernet-Verbindung mit TCP/IP Protokollstapel. Jedes Gerät besitzt hierbei eine eigene Ethernet- und IP-Adresse.

Die Konsumartikelausgabevorrichtung 21 "Brooklyn^{®}" ist direkt über einen (Grapos^{®}-)ECR-Schankbus mit dem Schankcomputer "NGx^{®}" verbunden. Die Konsumartikelausgabevorrichtung 22 "Bottoms Up Beer" ist ebenfalls direkt über einen ECR-Schankbus mit dem Schankcomputer "NGx^{®}" verbunden. Die Zuordnung der Konsumartikelausgabevorrichtungen 21 und 22 zu den Kartenlesern 40 erfolgt über die BUS-Schlossnummer.

Die Konsumartikelausgabevorrichtung 23 "Kaffee und Tee" ist über einen AUG-AVA-VMI-Adapter (AVA-MDB-VMI Version 5.0) mit dem Schankcomputer "NGx^{®}" verbunden. Der MDB-Master ist hierbei ein Kapselautomat (MMITower^{®} Version 1.11) des Herstellers Nespresso^{®}. Dieser ist über eine AUG-CSI-MDB Schnittstelle (MDB Slave Kartenleser) seriell an den Schankautomat "NGx^{®}" angebunden. Hierbei ist am Nespresso^{®}-Tower der interne Kartenleser (8-pol Wannenstecker ganz rechts oben) abgesteckt. Das 20-polige Displaykabel bleibt angesteckt (das Display zeigt die Beträge an). Für die Verbindung zwischen dem AVA-MDB-VMI und dem Schankcomputer "NGx^{®}" wird über das E-Kr-Anf-Protokoll oder das CSI/CCI-Protokoll vorgenommen. Alternativ sind auch andere Kaffeemaschinen, welche direkt CSI-Protokollfähig oder E-Protokollfähig sind, verwendbar.

Die Konsumartikelausgabevorrichtung 24 "Enomatic^{®}" ist mit einem Eno-Soft-PC^{®} verbunden, welcher wiederum über Ethernet mit dem Server verbunden ist.

Der Schankcomputer "NGx^{®}" ist ebenfalls über Ethernet und TCP/IP Protokollstapel mit dem Server verbunden. Auf dem Server wird die Verbundsoftware "Soft-ISB^{®}" sowie die Hotelsoftware "Casablanca^{®}" ausgeführt.

Die in Fig. 3 gezeigte spezifische Ausführungsform eines erfindungsgemäßen Konsumartikelausgabesystems 1 wird in folgendem Verfahren betrieben:

Der NGx^{®} Schankcomputer wertet zyklisch zu jeder Tages- und Nachtzeit die Kartenleser 40 aus und erlaubt bzw. verhindert den Bezug von Getränken an den Konsumartikelausgabevorrichtungen 21, 22, 23, 24 in Abhängigkeit davon, ob ein mit einem der Kartenleser 40 in Kontakt gebrachte Transponder T in Form einer Zimmerkarte gültig ist oder nicht. Eine Zimmerkarte ist dann gültig, wenn diese am NGx^{®}-System angemeldet wurde, d.h. die Zimmerkarte mit einer Zimmernummer verknüpft ist. Zu jeder Zimmernummer können beliebig viele Zimmerkarten angemeldet werden. Mit der Anmeldung erstellt der Schankcomputer "NGx^{®}" eine Datei und speichert diese auf dem Server. Zusätzlich zur (einmaligen) Anmeldung muss die Zimmernummer aktuell mit einem Gast belegt sein, um einen Konsum freizugeben. Diese Belegungsinformation erhält der Schankcomputer "NGx^{®}" von der Verbundsoftware "Soft-ISB" über eine auf dem Server hinterlegte Datei. Diese Datei enthält die Zimmernummer sowie den Zeitraum (von/bis) in welchem der Gast im Hotel eingecheckt ist. Die hierzu benötigten Informationen werden aus der Hotelsoftware "Casablanca^{®}" bezogen. Ist nun ein Gast gültig auf einem Zimmer gebucht, so kann er beliebige Getränke an jenem Gerät beziehen, an welchem er sich mit seiner Zimmerkarte ausgewiesen hat. Jeder Bezug wird unverzüglich am Schankcomputer "NGx^{®}" gespeichert, mit der Zimmernummer verknüpft, und daraufhin über einen Dateieintrag an die Verbundsoftware "Soft-ISB^{®}" übermittelt. In der Verbundsoftware "Soft-ISB^{®}" wird diese Datei für die Hotelsoftware "Casablanca^{®}" aufbereitet und an Casablanca zur Verarbeitung weitergegeben. Der Getränkebezug wird auf dem Zimmerkonto verbucht.

In einer Abwandlung des obigen Ausführungsbeispiels wird anstelle zu der gerade beschriebenen Ausgestaltung als RFID-Transponder eine Debit- oder Kreditkarte des Benutzers verwendet. Die zur Identifizierung des Benutzers benötigten Daten werden dabei aus einem in die Karte integrierten RDIF-Transponders und/oder EMV-Chips und/oder Magnetstreifens bezogen.

Gemäß einer weiteren vorteilhaften Ausgestaltung ist der Transponder nicht lediglich ein RFID-Transponder, sondern ein NFC-Transponder. Vorzugsweise ist dieser in ein Smartphone integriert. Durch Auflegen des Smartphones auf ein entsprechendes Lesegerät wird die Identifikation des Benutzers bewirkt.

Die Ausführungsbeispiele dienen lediglich der Beschreibung möglicher Implementierungen und sind nicht als Beschränkung des durch die Ansprüche definierten Schutzbereichs zu verstehen. Ferner beinhaltet die Beschreibung Details der Ausführungsbeispiele, die zur Implementierung der Erfindung nicht erforderlich sind. Solche Bestandteile sind selbst dann nicht erfindungswesentlich, wenn sie mit erfindungswesentlichen Bestandteilen eine strukturelle Einheit bilden aber für den Fachmann offensichtlich ist, dass diese strukturelle Einheit aufgelöst werden kann, ohne den Erfindungsgedanken zu verlassen.

## Patentansprüche

1. Konsumartikelausgabeverfahren, das die Schritte aufweist:
- Identifizieren eines Benutzers (B) an einer Konsumausgabevorrichtung (21, 22, 23, 24);
- Auswählen eines Konsumartikels (A) durch den Benutzer (B) an der Konsumausgabevorrichtung (21, 22, 23, 24);
- Ermitteln, ob dieser Benutzer (B) konsumberechtigt ist;
- Ausgeben des durch den Benutzer (B) gewählten Konsumartikels (A), falls der Benutzer (B) grundsätzlich konsumberechtigt ist;
- Übermitteln von mit dem ausgegebenen Konsumartikel (A) in Verbindung stehenden Informationen (Menge, ID oder Preis) an eine elektronische Datenverarbeitungsvorrichtung, die mit der Konsumartikelausgabevorrichtung (21, 22, 23, 24) über ein elektronisches Datennetz (31, 32) verbunden ist;
- Erfassen der Informationen und Verbuchen auf einem Konto (K), welchem der Benutzer (B) zugeordnet ist, durch die elektronische Datenverarbeitungsvorrichtung.

2. Konsumartikelausgabeverfahren gemäß Anspruch 1, wobei der Benutzer (B) mittels eines Transponders (T), vorzugsweise eines RFID-Transponders, einer Debit- oder Kreditkarte, eines EMV-Chips, eines Magnetstreifens, oder mittels eines Smartphones mit NFC-Transponder, identifiziert wird, entweder durch die Konsumartikelausgabevorrichtung (21, 22, 23, 24), oder durch ein Lesegerät (40), das mit der Konsumartikelausgabevorrichtung (21, 22, 23, 24) und/oder mit der elektronischen Datenverarbeitungsvorrichtung verbunden ist.

3. Konsumartikelausgabeverfahren gemäß einem der vorhergehenden Ansprüche, wobei das Konto (K), welchem der Benutzer (B) zugeordnet ist, nicht innerhalb des Transponders (T) gespeichert ist, sondern innerhalb der elektronischen Datenverarbeitungsvorrichtung, und der Transponder (T) lediglich zur Identifikation des Benutzers (B) herangezogen wird.

4. Konsumartikelausgabeverfahren gemäß einem der vorhergehenden Ansprüche, wobei das Verfahren zum Einsatz in einem Gastronomie- und/oder Hotelbetrieb vorgesehen ist.

5. Konsumartikelausgabeverfahren gemäß des vorhergehenden Anspruchs, wobei zum Ermitteln der Konsumberechtigung des Benutzers (B) überprüft wird, ob dieser bzw. sein Transponder (T) zur aktuellen Zeit einem Hotelzimmer zugeordnet ist.

6. Konsumartikelausgabeverfahren gemäß einem der vorhergehenden Ansprüche, des Weiteren aufweisend den Schritt:
- Ermitteln, ob der Benutzer (B) speziell zum Konsum an der gewählten Konsumartikelausgabevorrichtung (21, 22, 23, 24) und/oder speziell zum Konsum des gewählten Konsumartikels (A) berechtigt ist.

7. Konsumartikelausgabeverfahren gemäß des vorhergehenden Anspruchs, wobei zum Ermitteln der speziellen Konsumberechtigung ermittelt wird, ob der gewählte Konsumartikel (A) Alkohol und/oder Koffein und/oder Nikotin enthält, und überprüft wird, ob der Benutzer (B) zum Konsum von alkoholhaltigen bzw. koffeinhaltigen bzw. nikotinhaltigen Konsumartikeln (A) berechtigt ist.

8. Konsumartikelausgabeverfahren gemäß einem der vorhergehenden Ansprüche, wobei mehrere Benutzer (B1, B2, B3) einem Konto (K) zugeordnet sind.

9. Konsumartikelausgabeverfahren gemäß einem der vorhergehenden Ansprüche, wobei im Falle eines Verlustes eines Transponders (T) dieser Transponder (T) sperrbar ist.

10. Konsumartikelausgabeverfahren gemäß einem der vorhergehenden Ansprüche, wobei der Transponder (T) vorzugsweise eine Kredit- oder Debitkarte, oder ein Smartphone mit NFC-Transponder ist, des Weiteren aufweisend den Schritt:
- Abbuchen des Preises des Konsumartikels von einem Kreditkarten- oder Bankkonto des Benutzers (B).

11. Konsumartikelausgabevorrichtung (21, 22, 23, 24), die zum Ausführen eines Konsumartikelausgabeverfahrens gemäß einem der Ansprüche 1 bis 10 eingerichtet ist, wobei
die Konsumartikelausgabevorrichtung (21, 22, 23, 24) dazu eingerichtet ist, mit einer elektronischen Datenverarbeitungsvorrichtung über ein elektronisches Datennetz (31, 32) zu kommunizieren.

12. Konsumartikelausgabevorrichtung (21, 22, 23, 24) gemäß des vorhergehenden Anspruchs, die des Weiteren dazu eingerichtet ist, einen Transponder (T) zu identifizieren.

13. Elektronische Datenverarbeitungsvorrichtung, die zum Ausführen eines Konsumartikelausgabeverfahrens gemäß einem der Ansprüche 1 bis 10 eingerichtet ist, wobei
die elektronische Datenverarbeitungsvorrichtung dazu eingerichtet ist, mit einer Konsumartikelausgabevorrichtung (21, 22, 23, 24) über ein elektronisches Datennetz (31, 32) zu kommunizieren.

14. Elektronische Datenverarbeitungsvorrichtung gemäß des vorhergehenden Anspruchs, die des Weiteren dazu eingerichtet ist, mit einem Lesegerät (40) über das elektronische Datennetz (31, 32) zu kommunizieren.

15. System (1) zum Ausführen eines Konsumartikelausgabeverfahren gemäß einem der Ansprüche 1 bis 10, das aufweist:
- Eine elektronische Datenverarbeitungsvorrichtung gemäß Anspruch 13 oder 14;
- Wenigstens eine Konsumartikelausgabevorrichtung (21, 22, 23, 24) gemäß Anspruch 11 oder 12;
- Wenigstens einen Transponder (T); wobei
die Konsumartikelausgabevorrichtung (21, 22, 23, 24) und die elektronische Datenverarbeitungsvorrichtung über ein elektronisches Datennetz (31, 32) miteinander verbunden sind.

16. System (1) gemäß Anspruch 15, wobei die Konsumartikelausgabevorrichtung (21, 22, 23, 24) dazu eingerichtet ist, den Transponder (T) zu identifizieren.

17. System (1) gemäß Anspruch 15, welches des Weiteren ein Lesegerät (40) aufweist, das über das elektronische Datennetz (31, 32) mit der Konsumartikelausgabevorrichtung (21, 22, 23, 24) und/oder mit der elektronischen Datenverarbeitungsvorrichtung verbunden ist, wobei
das Lesegerät (40) dazu eingerichtet ist, den Transponder (T) zu identifizieren.

18. System (1) gemäß einem der Ansprüche 15 bis 17, wobei der Transponder (T) eine Kredit- oder Debitkarte, oder ein Smartphone mit NFC-Transponder ist.
